# EUROPEAN PATENT SPECIFICATION

(11) **EP 3 311 052 B1**
(45) Date of publication and mention of the grant of the patent: **18.03.2020**
(21) Application number: 16731307.1
(22) Date of filing: 20.06.2016
(51) Int. Cl.: F16K 37/00

(54) **SAFETY VALVE LEAK ANALYSIS SYSTEM**
SYSTEM ZUR ANALYSE VON SICHERHEITSVENTILLECKS
SYSTÈME D'ANALYSE DE FUITE DE SOUPAPE DE SÉCURITÉ

(30) Priority: 19.06.2015 GB 201510797
(43) Date of publication of application: 25.04.2018
(60) Divisional application: 20156926.6
(73) Proprietor: Seetru Limited, Bristol BS1 6UT (GB)
(72) Inventor: VARGA, Andrew Philip, Bristol Bristol BS1 6UT (GB)
(74) Representative: Barker Brettell LLP
(86) International application number: PCT/GB2016/051840
(87) International publication number: WO 2016/203273

(56) References cited:
- EP-A1- 0 637 713
- WO-A1-2006/092548
- WO-A1-2007/107725
- WO-A1-2014/105839
- WO-A2-99/56047
- JP-A- S5 999 177

## Description

The present invention relates to a safety valve test system and in particular to an automated test system for determining the condition of a safety valve.

Conventional valve test benches are well known in the art. Such test benches apply relatively small volumes of pressurised media to a valve under test. Lifting of the safety valve occurs due to the force of the pressurised media used for the test. As the flow volumes available from test benches are relatively low the attained lifts of the valve disk from the valve seat are low. Further, as the test proceeds and the valve lifts open the flow capacity of the valve will very quickly dominate, thus such test benches are only capable of applying over-pressures slightly above the set pressure of the valve. The over-pressure, being very close to the set pressure, is therefore a useful indicative estimate of the safety valve set pressure.

Conventional valve test benches rely heavily on the operator to calculate and apply the correct pressures to the valve, read and record the over-pressure measurements and calculate whether the valve is operationally safe. This introduces the possibility of human errors making tests less consistent and repeatable.

WO 2006/092548 A1 describes a method of measuring the condition of a safety valve. The method comprises measuring a condition parameter that varies with the sealing force of the valve. The condition parameter may be determined from in-line measurements, such as measurements of a pressure pso at which the valve will open and a pressure psl at which the valve will leak.

WO 2007/107725 A1 describes a method of determining the leak point of a valve, the valve comprising a valve closure member biased into contact with a valve seat. The method comprises the steps of: applying a valve lift force to the valve closure member; monitoring a parameter with a sensor; recording a signal from the sensor indicative of variations in the parameter; and analysing the recorded data.

WO 99/56047 A2 describes a pressure relief valve monitoring device. The monitoring device includes a sensor input module located proximate to a pressure relief valve, a microcontroller located within the sensor input module, and a real time clock/calendar also located within the sensor input module. The monitoring device also includes a number of sensors, including a position sensor mounted on the pressure relief valve for measuring the position of the valve's closure element relative to the inlet nozzle seat and for generating a lift signal representative of such position; a pressure sensor mounted on the pressure relief valve for measuring the pressure of the pressure system and generating a pressure signal representative of such pressure; and a leakage sensor mounted on the pressure relief valve and positioned in close proximity to the inlet nozzle seat and capable of detecting noise generated by leakage of fluid between the inlet nozzle seat and the closure element when the closure element is engaged with the inlet nozzle seat. The microcontroller is configured to receive and store signals from any or all of the three sensors and correlate the receipt thereof with an indication of time from the real time clock/calendar to determine certain characteristics of valve performance.

The invention provides a safety valve analysis system comprising the features of claim 1.

Further implementation aspects are defined in the dependent claims 2-15.

The system may include any one of more features disclosed in either of the description of the preferred embodiment of the invention and/or the drawings. Preferred embodiments of the invention will now be described by way of example only with reference to the accompanying drawings in which:
**Figure 1** is a safety valve and analysis system according to an embodiment of the present invention;
**Figure 2** shows a schematic diagram of the safety valve of Figure 1;
**Figure 3** shows a realisation of the valve analysis system added to a conventional safety valve test bench, with a safety valve mounted on the test bench and with sensors fitted;
**Figure 4** shows a schematic diagram of a safety valve fitted to the system shown in Figure 1;

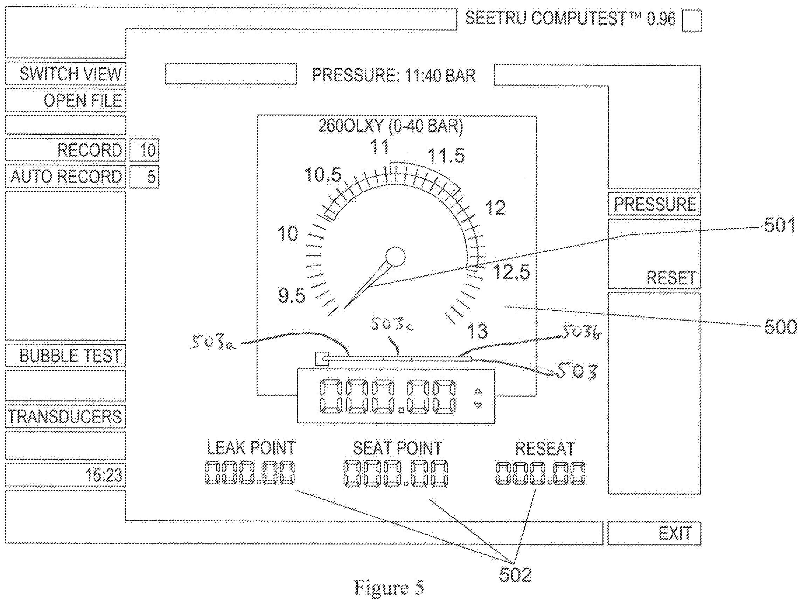

**Figure 5** shows a representation of the display from the system in Figures 1 and 3; and
**Figure 6** shows a data plot on the display from the system of Figures 1 and 3.

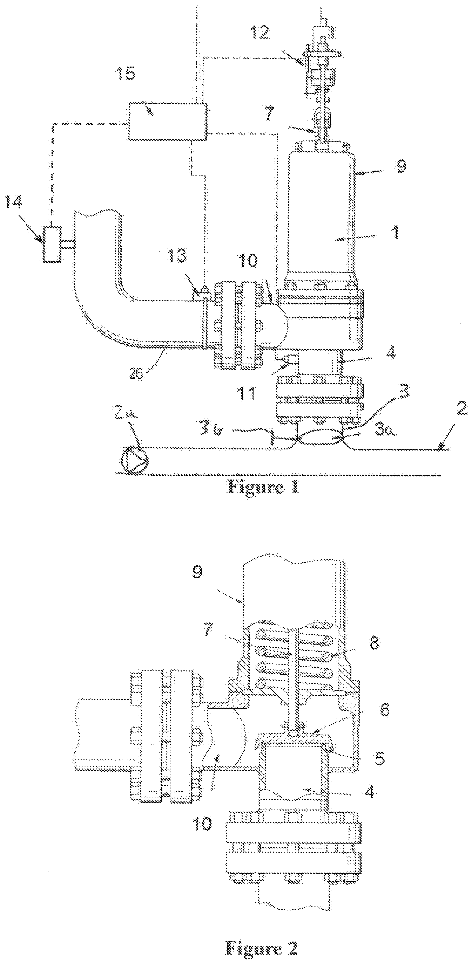

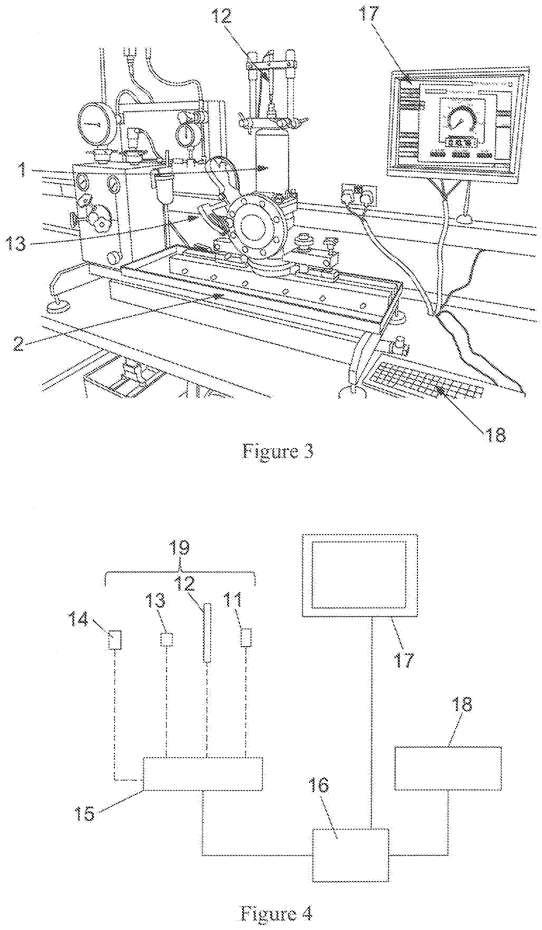

Referring to Figures 1 to 4, a safety valve 1 is fitted to the flow controlled outlet pipe 3 of a conventional safety valve test bench 2. The test bench 2 comprises a source of source of gas pressure, in the form of a compressor 2a, or an accumulator vessel or gas bottle. The outlet pipe 3 has a flow control valve 3a located in it which is arranged to control the rate of flow of gas from the pressure source 2a to the valve 1. The valve 3a is manually operated by means of a manual control input 3b such as a knob or lever. The valve is a conventional safety valve comprising an inlet port 4, a valve seat 5 which surrounds the inlet port 4 and a valve disk 6 arranged to seat on the valve seat 5 sealing the inlet port 4. The valve disk 6 is held against the valve seat 5 under spring force applied via a spindle 7 which is attached to the centre of the valve disk 6. A spring 8 surrounds the spindle 7 and is contained within a spring housing 9 which is isolated from the flow path through the valve between the valve inlet 3 and valve outlet 10.

A valve analysis system is integrated with the test bench 2. The valve analysis system comprises a set of sensors arranged to measure parameters of the safety valve 1. The sensors include a pressure sensor 11, a displacement sensor 12, an acoustic leak sensor 13, and gas mass flow rate sensor 14. The pressure sensor 11 is a highly sensitive electronic transducer, the displacement sensor 12 is a high accuracy electronic lift/ displacement transducer, e.g. a laser or a linear variable displacement transducer (LVDT), and the acoustic sensor 13 is an ultra-sonic sensor. The pressure sensor 11 is arranged to measure the fluid pressure in the valve inlet 4, this is the system pressure that the safety valve governs. The displacement sensor 12 is attached to the safety valve 1 and monitors any movement of the valve spindle 7. The acoustic leak sensor 13 is arranged proximate to the outlet 10 of the safety valve 1. The gas mass flow rate sensor 14 is connected to the valve outlet via a pipe 26. The valve analysis system also comprises a data acquisition unit 15, a computer 16, a display 17 and a keyboard 18. The set of sensors 19 are connected to the data acquisition unit 15 which provides an interface between the sensors 19 and the computer 16. A mouse and / or touch screen may also be used. The data acquisition unit 15 comprises analogue to digital convertors arranged to receive analogue signals from the sensors 19 and convert them into digital signals containing valve data which the computer 16 can process. A keyboard 18 is arranged to allow an operator to provide input to the computer 16. The display 17 is connected to the computer and is arranged to display measured and computed parameters of the safety valve generated by the computer 16. The computer 16 comprises a processor and memory and is arranged to run software which receives the valve data from the data acquisition unit 15 and performs data analysis, for example selecting one of a set of algorithms and using the selected algorithm to determine the condition of the valve, and calibration functions, and controls the display 17 to indicate a variety of data to the operator.

In use an operator clamps a safety valve 1 to outlet pipe 3 from the test bench 2. The acoustic sensor 13 and displacement sensor 12 are fitted to the valve 1 and, if the test requires it, the gas mass flow rate sensor 14 is connected to the valve outlet 10. The display presents a list of pre-programmed tests an operator can choose from. An analysis is initiated by the operator selecting a particular test via command through the keyboard 18. The system operates in two modes: a real time mode and a post-processing mode. In real-time mode the algorithms evaluate essential parameters during the test and in post-processing mode further analysis of the recorded test data stored in the computer memory is used to determine further parameters of interest.

In general, during the test, the gas pressure at the valve inlet 3 is increased by the operator opening the flow control valve 3a. The pressure is increased gradually until the valve 1 opens. As it opens the computer 16 monitors the signals from the sensors 11, 12, 13, 14 to determine the times at which the various stages of opening, such as start-to-leak, start-to-open, or maximum achievable pressure, occur, and records those times. It is also arranged to monitor the output form the pressure sensor 11 over the whole test period to record the pressure over the test period. It may then be arranged to determine from the output from the pressure sensor 11 the pressure at the inlet when one or more of those events occurs, and over various periods beginning with or ending with one or more of those events. From those measurements it is arranged to determine a value for the condition of the valve as will be described in more detail below.

In order to ensure objective and repeatable evaluation of set pressure it has been found that the speed at which the pressure at the valve inlet is raised, which is determined by the flow rate of gas to the inlet through the flow control valve 3a, must not be too fast or too slow. The system's display indicates the rate of the flow being either too fast, too slow, or just right and an operator watching the display manually controls the flow rate of gas from the test bench to the valve input by way of a manual control valve, so that the increase in applied pressure is kept at roughly 3% of the expected set pressure per second. The expected set pressure may be a value stored in memory in the computer, for example having been input by the operator, or selected by the computer from a number of options stored in memory on the basis of a user input indicative of the type of valve being tested, or on the basis of the valve serial number as described below. As the pressure at the valve inlet increases the computer is arranged to monitor the change in pressure by monitoring the signal from the pressure sensor 11 and to determine from that signal, in real time, a rate of change of pressure with time. If the rate is within a predetermined range, for example from 2% to 4% of the expected set pressure, then the computer is arranged to indicate via the display 17 that the rate is acceptable. If the rate of increase is above or below the preferred range, then that is indicated to the operator on the display so that the operator can respond by opening or closing the flow control valve 3a.

The conventional test bench 2 has a typically small flow capacity, when the pressure is increased at the inlet 6 of a safety valve the following three stages occur in the following order:
1) The valve will start to leak (no measurable movement, but this can be detected acoustically)
2) The valve disk will start to lift away from the seat (by an amount that can be measured)
3) Eventually the safety valve will open sufficiently to overwhelm the flow capacity of the test bench and the pressure will not increase any further (the Maximum Achievable Pressure), after which it will then decrease again.

The system uses various definitions of set pressure depending on the valve in question, the definitions include:
1) Start-to-leak (or first-audible-leak) pressure,
2) Start-to-lift pressure,
3) Highest pressure achieved during the test (the Maximum Achievable Pressure).

The system uses the valve data from the sensors in various combinations in order to extract appropriate metrics, for example, in different manners for hard and soft seal types. If the seal type is hard and lift is measured then the Set point may be appropriately evaluated as the pressure at which the measured start-to-lift occurred. If the seal type is hard and no lift is measured then the Set point may be appropriately evaluated as the highest pressure achieved during the test. If however the seal type is soft and lift is measured then the Set point may be appropriately evaluated as the pressure at which the first acoustic level increase occurs.

Lift is a measure of movement of the valve disk away from the valve seat. The system measures lift with the displacement sensor 12 which monitors, for example, the top of the valve spindle 7 which is attached directly to the valve disk 6. The 'start-to-lift' point is defined as the pressure at which the lift of the valve disk 6 increases above a defined threshold: in the case of hard seals this threshold may be around 3micrometres, in the case of soft seals this threshold may be around 7micrometres. The displacement sensor has a comparatively high resolution, able to resolve down to at least 2 micrometres.

The 'start-to-leak' or 'first-audible-leak' point is defined as the pressure at which the acoustic signal increases above the monitored background noise level. This will occur when the acoustic level increases above a predetermined threshold above the background. The system is arranged to monitor the acoustic level by monitoring the output from the acoustic sensor. The system is also arranged to provide calibration of the acoustic sensor and to set the magnitude of the threshold which depends on the characteristic output of the sensor and the manner / location in which the sensor is held in place. A consistent mounting mechanism is also provided which prevents movement of the acoustic sensor.

The maximum achieve able pressure is simply defined as the maximum pressure that is achieved during the test, which may be for example the whole period during which the valve is connected to the system, or the period between two points in the test process defined by the computer 16 as the beginning and end of the test. This might be the period over which the system is arranged to collect data from the pressure sensor output.

The system uses different combinations of these measurements, and the maximum achievable pressure, depending on the type of measurement required. The allowed relationship between start-to-lift and start-to-leak is managed within the algorithm according to the type of valve and test required. Thus, for example, in the case of a hard seal the system will not allow start-to-lift to be recorded during an increase in inlet pressure until start-to-leak has occurred, whereas in the case of a soft seal the reverse is true.

The system is also configured to evaluate reseal and reseat pressures. To measure these, the inlet pressure is reduced, for example by the operator closing the flow control valve 3a. As the gas flows through the valve the inlet pressure decreases, unitl the valve closes. The system is arranged to monitor the outputs from the sensors 11, 12, 13, 14 as the valve closes to determine the reseal and reseat pressures. The reseal pressure is defined to be the pressure at which the acoustic leak reduces below the acoustic threshold. The reseat pressure is defined to be the pressure at which the lift reduces below the lift threshold. These parameters are evaluated via post-processing analysis and are essentially the reverse calculations of the start-to-lift and start-to-leak.

In order to attain appropriate levels of accuracy it is necessary to use sensors of appropriate full-scale range. This is because a small percentage full-scale error potentially results in a very large percentage and absolute errors at the low end of the pressure range. It is thus better to use as low as possible a pressure range sensor. The present system automatically calculates the expected percentage error (of reading) for the measurement and presents this to the operator; the relevant International Standards define the acceptable percentage error of value. If this is out of the acceptable range the operator is invited to choose a more appropriately ranged sensor.

The system evaluates the condition of the valve by measuring the difference between the start-to-leak pressure and the start-to-lift pressure. Algorithms for estimation of Seetru Condition Rating® can be found in International Patent Application WO/2006/092548. For accurate evaluation of the Condition Rating the system uses the start-to-leak and start-to-lift pressures parameters. For a quick and simple estimate the system uses the maximum achievable pressure instead of the start-to-lift pressure to calculate the estimated Condition Rating.

The system provides a traffic light display scheme to aid the interpretation of the Condition Rating. The system allows a user to set the lights according to their preference, for example a score of 0-3 may indicate green (i.e. that the valve is in good order), a score of 4-7 may indicate amber, and a score of 8 and above may indicate red (i.e. that the valve has failed the test and needs improvement).

Bubble counting is a method used to measure the leak tightness of a safety valve at a pre-defined pressure, e.g. 10% below the set pressure. The concept is that any gas media that leaks past the seal of a safety valve is piped into a water beaker and the bubble rate emerging from the pipe under water in the beaker is counted. International standards define precisely how such a measurement is to be performed and the acceptable bubble rates.

The analysis system software is configured to control bubble counting. Firstly, a rubber bung is inserted into the outlet 10 of the safety valve with a pipe 26 in it; any leaking media is piped to the electronic gas mass flow meter 14. The pressure to be applied at the inlet 4 of the safety valve is calculated (according to international standards) by the analysis system, the operator applies this pressure. There must then be a stabilisation waiting time (typically one minute - defined by international Standards), the automatic analysis system applies this waiting time - showing the operator a countdown. The test itself is an averaged bubble rate - typically over one minute. The analysis system converts the measured mass flowrate into the equivalent bubble rate and provides a colour coded bar chart presentation of the measured bubble count.

A range of displays is necessary to facilitate effective use of the Safety Valve Analysis System. The system uses three types of display:-
1) Time plots showing the sensor outputs during tests each in the form of a graph with two axes, with one axis representing time and the other axis representing the value of the sensor output
2) Digital displays showing values numerically
3) Simulated dial gauges
4) Graphical information representations / visualisations
5) Hard copy certification

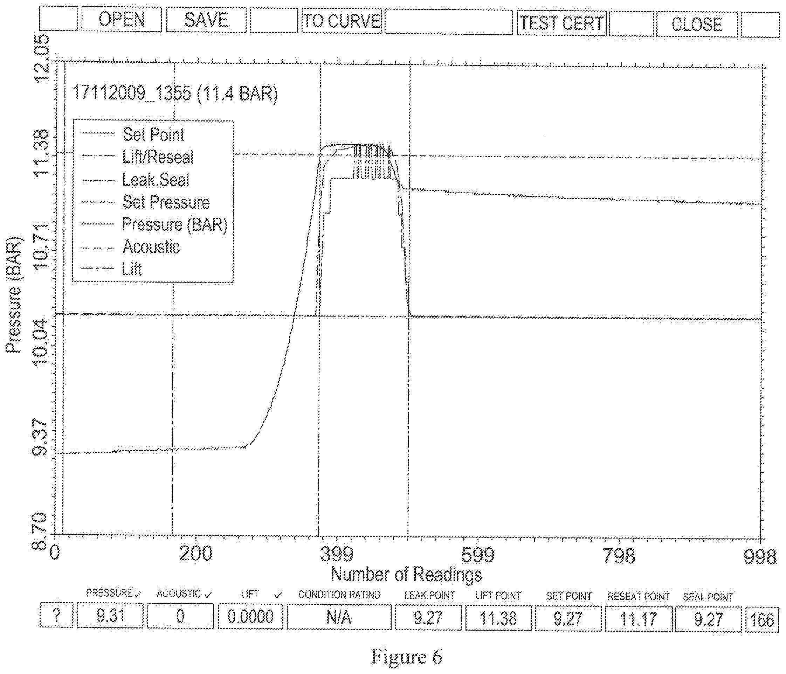

As shown in Figure 6, the system is arranged to record and plot the pressure sensor, displacement (lift) sensor and acoustic sensor signals over time. In order to aid the use of the lift plot by technicians a post-processing algorithm may be applied to the represented plot whereby, once the lift threshold has been crossed, the part of the timeline plot which occurred before the lift threshold was crossed is flattened, so that the representation / visualisation shows a simple and clear step at the point defined as 'start-to-lift'. The system may also apply filtering / smoothing algorithms to the time plots to improve the 'look' of the plots.

In order to facilitate the analysis and use of the time plots it is necessary to provide various zoom functions which allow the plots to be enlarged on the display. The system provides a variable zoom, and in addition the system has three snap zoom functions.

The system provides a snap-zoom into the start-to-lift region: this shows the period from just before the start-to-lift and /or the start-to-leak points through to the whole of the lift, e.g. from 35msecs before the start to 35msecs afterwards, the objective being to scale the display to be as large as possible and to put the start area in the middle of the screen.

The system provides a snap-zoom into the reseat / reseal region: this applies the same principle as the snap-zoom into the start-to-lift region and for the start region, but in this case for the closing region.

The system provides a snap-zoom into the whole of the active test region: this shows the period from just before the start-to-lift point through to after the reseat / reseal point, e.g. from 35msec before the lift to 35msecs after the reseat / reseal point - the objective being to scale the display to be a large as possible and to put the whole test area in the middle of the screen.

The system is arranged to allow an operator to control a cursor on the display so that the operator can analyse the plots. As the cursor is run along the plots readouts of the valve data are provided for each plot and it is possible to click and select values on the plots. The system positions fixed cursors on the plots to mark the determined parameter values, e.g. start-to-leak pressure, start-to-lift pressure, Maximum Achieved Pressure, reseal pressure etc. The system allows the operator to manually move the fixed cursors to change the parameter values thus allowing the operator to override the automatically determined results.

The system displays digital readouts 502 of all parameters on the display, the readouts are colour coded to indicate acceptability. In order to facilitate evaluation of pressure parameters (i.e. pressure applied at the inlet to the valve, start-to-lift pressure, start-to-leak pressure, Maximum Achieved Pressure and reseal pressure) the system displays a simulated dial gauge 500 on the display. This has pointer hands 501 which point to the values of the various parameters. The reading scale of the dial gauge is automatically scaled to a range appropriate for test being undertaken. The pointer hands move dynamically with the measurement, in a manner analogous to a conventional analogue dial gauge. Once the test is over, marker pointers are left in place to show the determined values, i.e. start-to-lift pressure, start-to-leak pressure, Maximum Achieved Pressure and reseal pressure etc. The simulated dial gauge scale is also colour coded to indicate acceptable result ranges, e.g. reading ±3% around an expected reading value.

Various graphical 'visualisations' are used to provide indications to the operator, for example, test speed, i.e. the rate of increase of valve inlet pressure, 'Too slow - correct rate - Too fast' indication may be provided by a coloured horizontal bar chart 503, a central green region 503c corresponding to 'target rate achieved', with left and right regions 503a, 503b corresponding to 'Too slow' and 'Too fast' on the left and right respectively. As an alternative to this, a moving dial similar to that 501 for the pressure may be used to indicate rate of increase of pressure with the target rate indicated on the dial. All digital parameter values displayed are colour coded green or red to indicate pass or fail.

The system software is also capable of generating a hard copy Test Certificate showing all the key test information including time plots with marked parameters. A printer may be connected to the system to print out the certificate.

Each sensor may be 'intelligent' in that it stores an electronically readable identification serial number. Where the sensor is 'intelligent' the system automatically reads the identification of the connected sensor and accesses the relevant calibration and range data record. When a sensor is used which is not 'intelligent' the system allows the user to enter the serial number manually to access the calibration and range data record. The system then checks the suitability of the sensor against the expected measurement values, e.g. set pressure, to ensure that it is within the allowable range and the anticipated error rate associated with the sensor does not exceed the allowed error budget for the test. The system also checks to ensure that the calibration is still in date. The calibration date is displayed on the screen and on the test certificate, together with the calibration expiry date. If the calibration is out of date the system can be set to either disallow testing using that sensor, or merely to highlight on the screen and test certificate the calibration date information. Where the sensor is not calibrated it can still be used and the 'not-calibrated' status is shown instead of the above calibration information. The system is also arranged to perform calibration of the sensors through calibration software running on the computer.

In a modification to the described system not belonging to the present invention, for higher cost implementations, an automatic control valve replaces the manual flow control valve. The system automatically controls flow from the test bench via a negative feedback control loop algorithm so that the increase in applied pressure is kept at roughly 3% of the expected set pressure per second, for example it may be within a range of 1% to 5%. The system may therefore be arranged to either provide a fully automated valve test where the system controls the flow from the test bench while determining the valve condition data, or alternatively the system may be arranged to provide a semi-automated valve test where the system guides the operator to control the flow from the test bench while determining the valve condition data.

## Claims

1. A safety valve analysis system comprising: a plurality of sensors comprising a displacement sensor (12) arranged to measure displacement of a valve member (6), an acoustic sensor (13) arranged to measure noise from within a valve body and a pressure sensor (11) arranged to measure fluid pressure at a valve inlet (4); data acquisition means (15) arranged to receive signals from the sensors and generate corresponding valve data; a flow controlled outlet pipe (3) to which the safety valve can be fitted; a flow control valve (3a), comprising a manual control input (3b), located in the outlet pipe (3) and arranged to control the rate of flow of gas from a pressure source (21) to the valve (1); a display unit (17); a computer (16) arranged to generate an output indicative of the condition of the safety valve based on the valve data; wherein the computer is arranged:
- to monitor a change in pressure applied to the safety valve by monitoring a signal from the pressure sensor and to determine from the signal, in real time, a rate of change of the pressure;
- if the rate is within a predetermined range to indicate via the display (17) that the rate is acceptable; and
- if the rate is above or below the predetermined range, to indicate that via the display (17), thereby to direct an operator to maintain the rate of increase in pressure at the valve inlet by opening or closing the control valve (3a).

2. A system according to claim 1 wherein the sensors further comprise a gas mass flow meter (14), optionally wherein the gas mass flow meter (14) is arranged to measure a mass flowrate, the system is configured to convert the measured mass flowrate into the rate of bubbles leaking through the safety valve, and the computer (16) is arranged to generate the output based on the measured bubble rate.

3. A system according to any preceding claim wherein the system is arranged to determine from the valve data at least one set pressure value for the valve, and to calculate an indication of the condition of the valve from the at least one set pressure value, optionally wherein the at least one set pressure value includes the valve's start-to-leak pressure.

4. A system according to claim 3 wherein the at least one set pressure value includes the valve's start-to-lift pressure.

5. A system according to claim 3 or 4 wherein one of the at least one set pressure values is determined to be the pressure measured at the pressure sensor (11) when the noise detected by the acoustic sensor (13) reaches a predetermined threshold.

6. A system according to any one of claims 3 to 5 wherein one of the at least one set pressure value is determined to be the pressure measured at the pressure sensor (11) when displacement measured by the displacement sensor (12) reaches a predetermined threshold.

7. A system according to any one of claims 3 to 6 wherein one of the at least one set pressure value is determined to be the maximum pressure measured at the pressure sensor (11) after displacement measured by the displacement sensor (12) indicates the valve member (6) has lifted.

8. A system according to any one of claims 3 to 7 wherein one of the at least one set pressure value is determined to be the highest pressure recorded during the test.

9. A system according to any one of claims 3 to 8 wherein one of the at least one set pressure value is determined to be a reseal pressure or a reseat pressure wherein the computer (16) is arranged to determine the reseal pressure as the inlet pressure when output from the acoustic sensor (13) drops below a predetermined acoustic threshold and wherein the computer (16) is arranged to determine a reseat pressure as the inlet pressure when the displacement measured by the displacement sensor (12) falls below a predetermined threshold.

10. The system according to any preceding claim wherein the predetermined rate is in the range 2% to 4% of the expected set pressure per second.

11. The system according to any preceding claim wherein the computer (16) is arranged to select different algorithms for generating the output indicative of the condition of the safety valve based on the type of valve being tested; and/or wherein the system displays a plurality of digital readouts of calculated parameters which are indicative of the condition of a safety valve.

12. A system according to any preceding claim wherein the display unit (17) is arranged to display the output from the computer (16).

13. A system according to claim 12 wherein the output from the computer (16) is arranged to indicate which of a plurality of categories the condition of the valve is in, wherein each of the categories has a colour associated with it so that the colour is selected to indicate the condition of the safety valve, and wherein the display unit (17) displays the colour to a system operator.

14. A system according to any preceding claim wherein the system is arranged to produce a hard copy test certificate following testing; and/or wherein the system is arranged to store calibration and range data in relation to each of the sensors in a memory and access and compare the calibration with a required calibration data set thereby to determine whether the calibration and accuracy requirements are met.

15. A system according to any preceding claim wherein the display (17) is arranged to show a plurality of graphical plots of the valve data, optionally wherein the computer (16) applies an algorithm to smooth the plots.

## Patentansprüche

1. Sicherheitsventil-Analysesystem, umfassend: eine Vielzahl von Sensoren, die einen Wegsensor (12), der dafür eingerichtet ist, eine Verschiebung eines Ventilelements (6) zu messen, einen akustischen Sensor (13), der dafür eingerichtet ist, Lärm aus dem Inneren eines Ventilgehäuses zu messen, und einen Drucksensor (11) umfasst, der dafür eingerichtet ist, einen Fluiddruck an einem Ventileinlass (4) zu messen; ein Datenerfassungsmittel (15), das dafür eingerichtet ist, Signale von den Sensoren zu empfangen und entsprechende Ventildaten zu erzeugen; ein durchflussgeregeltes Auslassrohr (3), an welches das Sicherheitsventil angesetzt werden kann; ein Durchflussregelventil (3a), das einen manuellen Steuereingang (3b) umfasst, sich in dem Auslassrohr (3) befindet und dafür eingerichtet ist, die Durchflussrate von Gas von einer Druckquelle (21) zum Ventil (1) zu regeln; eine Anzeigeeinheit (17); einen Computer (16), der dafür eingerichtet ist, auf Grundlage der Ventildaten eine den Zustand des Sicherheitsventils anzeigende Ausgabe zu erzeugen; wobei der Computer eingerichtet ist, um:
- eine Änderung eines auf das Sicherheitsventil aufgebrachten Drucks durch Überwachen eines Signals vom Drucksensor zu überwachen und aus dem Signal in Echtzeit eine Änderungsrate des Drucks zu bestimmen;
- falls die Rate innerhalb eines vorab bestimmten Bereichs liegt, über die Anzeige (17) anzuzeigen, dass die Rate akzeptabel ist; und
- falls die Rate oberhalb oder unterhalb des vorab bestimmten Bereichs liegt, dies über die Anzeige (17) anzuzeigen, um hierdurch einen Bediener anzuweisen, die Druckanstiegsrate am Ventileinlass durch Öffnen oder Schließen des Regelventils (3a) aufrechtzuerhalten.

2. System nach Anspruch 1, wobei die Sensoren ferner einen Gas-Massendurchflussmesser (14) umfassen, wobei wahlweise der Gas-Massendurchflussmesser (14) dafür eingerichtet ist, einen Massenstrom zu messen, das System dafür ausgelegt ist, den gemessenen Massenstrom in die Rate durch das Sicherheitsventil leckender Blasen umzuwandeln, und der Computer (16) dafür eingerichtet ist, die Ausgabe auf Grundlage der gemessenen Blasenrate zu erzeugen.

3. System nach einem der vorhergehenden Ansprüche, wobei das System dafür eingerichtet ist, aus den Ventildaten mindestens einen Drucksollwert für das Ventil zu bestimmen und eine Anzeige des Zustands des Ventils aus dem mindestens einen Solldruckwert zu berechnen, wobei wahlweise der mindestens eine Solldruckwert den Leckgrenzdruck des Ventils beinhaltet.

4. System nach Anspruch 3, wobei der mindestens eine Solldruckwert den Hebegrenzdruck des Ventils beinhaltet.

5. System nach Anspruch 3 oder 4, wobei einer des mindestens einen Solldruckwerts als der am Drucksensor (11) gemessene Druck bestimmt wird, wenn der durch den akustischen Sensor (13) erfasste Lärm einen vorab bestimmten Grenzwert erreicht.

6. System nach einem der Ansprüche 3 bis 5, wobei einer des mindestens einen Solldruckwerts als der am Drucksensor (11) gemessene Druck bestimmt wird, wenn die durch den Wegsensor (12) gemessene Verschiebung einen vorab bestimmten Grenzwert erreicht.

7. System nach einem der Ansprüche 3 bis 6, wobei einer des mindestens einen Solldruckwerts als der am Drucksensor (11) gemessene Maximaldruck bestimmt wird, nachdem eine durch den Wegsensor (12) gemessene Verschiebung anzeigt, dass sich das Ventilelement (6) gehoben hat.

8. System nach einem der Ansprüche 3 bis 7, wobei einer des mindestens einen Solldruckwerts als höchster während des Tests aufgezeichneter Druck bestimmt wird.

9. System nach einem der Ansprüche 3 bis 8, wobei einer des mindestens einen Solldruckwerts als Wiederverschlussdruck oder Wiederaufsitzdruck bestimmt wird, wobei der Computer (16) dafür eingerichtet ist, den Wiederverschlussdruck als Einlassdruck zu bestimmen, wenn eine Ausgabe aus dem akustischen Sensor (13) unter einen vorab bestimmten akustischen Grenzwert fällt, und wobei der Computer (16) dafür eingerichtet ist, einen Wiederaufsitzdruck als Einlassdruck zu bestimmen, wenn die durch den Wegsensor (12) gemessene Verschiebung unter einen vorab bestimmten Grenzwert fällt.

10. System nach einem der vorhergehenden Ansprüche, wobei die vorab bestimmte Rate im Bereich von 2 % bis 4 % des erwarteten Solldrucks pro Sekunde liegt.

11. System nach einem der vorhergehenden Ansprüche, wobei der Computer (16) dafür eingerichtet ist, auf Grundlage des getesteten Ventils unterschiedliche Algorithmen zum Erzeugen der den Zustand des Sicherheitsventils anzeigenden Ausgabe auszuwählen, und/oder wobei das System eine Vielzahl digitaler Angaben berechneter Parameter anzeigt, die den Zustand eines Sicherheitsventils anzeigen.

12. System nach einem der vorhergehenden Ansprüche, wobei die Anzeigeeinheit (17) dafür eingerichtet ist, die Ausgabe aus dem Computer (16) anzuzeigen.

13. System nach Anspruch 12, wobei die Ausgabe aus dem Computer (16) dafür eingerichtet ist, anzuzeigen, in welcher einer Vielzahl von Kategorien sich der Zustand des Ventils befindet, wobei jede der Kategorien eine ihr zugeordnete Farbe aufweist, so dass die Farbe ausgewählt wird, um den Zustand des Sicherheitsventils anzuzeigen, und wobei die Anzeigeeinheit (17) die Farbe einem Systembediener anzeigt.

14. System nach einem der vorhergehenden Ansprüche, wobei das System dafür eingerichtet ist, nach dem Test eine Testbescheinigung in Papierform zu produzieren, und/oder wobei das System dafür eingerichtet ist, Kalibrierungs- und Schwankungsbereichsdaten in Bezug auf jeden der Sensoren in einem Speicher zu speichern und die Kalibrierung abzurufen und mit einem Datensatz einer erforderlichen Kalibrierung zu vergleichen, um hierdurch zu bestimmen, ob die Kalibrierungs- und Genauigkeitsanforderungen erfüllt sind.

15. System nach einem der vorhergehenden Ansprüche, wobei die Anzeige (17) dafür eingerichtet ist, eine Vielzahl grafischer Darstellungen der Ventildaten zu zeigen, wobei wahlweise der Computer (16) einen Algorithmus anwendet, um die Darstellungen zu glätten.

## Revendications

1. Système d'analyse de soupape de sûreté, comprenant : une pluralité de capteurs comprenant un capteur de déplacement (12) agencé pour mesurer le déplacement d'un élément de soupape (6), un capteur acoustique (13) agencé pour mesurer le bruit provenant de l'intérieur d'un corps de soupape et un capteur de pression (11) agencé pour mesurer la pression fluidique à une entrée de soupape (4) ; des moyens d'acquisition de données (15) agencés pour recevoir des signaux à partir des capteurs et générer des données de soupape correspondantes ; un tuyau de sortie à taux d'écoulement régulé (3) sur lequel la soupape de sûreté peut être ajustée ; une soupape de régulation de taux d'écoulement (3a), comprenant une entrée à commande manuelle (3b), située dans le tuyau de sortie (3) et agencée pour réguler le taux d'écoulement de gaz depuis une source de pression (21) jusqu'à une soupape (1) ; une unité d'affichage (17) ; un ordinateur (16) agencé pour générer une sortie indicative de la condition de la soupape de sûreté sur la base des données de soupape ; dans lequel l'ordinateur est agencé :
- pour surveiller un changement de pression appliqué sur la soupape de sûreté pour surveiller un signal provenant du capteur de pression et pour déterminer, à partir du signal, en temps réel, un taux de changement de la pression ;
- si le taux est au sein d'une plage prédéterminée, pour indiquer, par l'intermédiaire de l'affichage (17), que le taux est acceptable ; et
- si le taux est supérieur ou inférieur à la plage prédéterminée, pour indiquer ceci par l'intermédiaire de l'affichage (17), pour ainsi ordonner à un opérateur de maintenir le taux d'augmentation de pression à l'entrée de soupape en ouvrant ou fermant la soupape de régulation (3a).

2. Système selon la revendication 1, dans lequel les capteurs en outre comprennent un appareil de mesure de taux d'écoulement massique pour gaz (14), optionnellement dans lequel l'appareil de mesure de taux d'écoulement massique pour gaz (14) est agencé pour mesurer un taux d'écoulement massique, le système est configuré pour convertir le taux d'écoulement massique mesuré en un taux de bulles fuyant à travers la soupape de sûreté, et l'ordinateur (16) est agencé pour générer le résultat sur la base du taux de bulles mesuré.

3. Système selon une quelconque revendication précédente, dans lequel le système est agencé pour déterminer, à partir des données de soupape, au moins une valeur de pression de consigne pour la soupape, et pour calculer une indication de la condition de la soupape à partir de l'au moins une valeur de pression de consigne, optionnellement dans lequel l'au moins une valeur de pression de consigne inclut la pression de commencement de fuite de la soupape.

4. Système selon la revendication 3, dans lequel l'au moins une valeur de pression de consigne inclut la pression de commencement de levée de la soupape.

5. Système selon la revendication 3 ou 4, dans lequel une de l'au moins une valeur de pression de consigne est déterminée pour être la pression mesurée au capteur de pression (11) lorsque le bruit détecté par le capteur acoustique (13) atteint un seuil prédéterminé.

6. Système selon une quelconque des revendications 3 à 5, dans lequel une de l'au moins une valeur de pression de consigne est déterminée être la pression mesurée au capteur de pression (11) lorsque le déplacement mesuré par le capteur de déplacement (12) atteint un seuil prédéterminé.

7. Système selon une quelconque des revendications 3 à 6, dans lequel une de l'au moins une valeur de pression de consigne est déterminée être la pression maximum mesurée au capteur de pression (11) après que le déplacement mesuré par le capteur de déplacement (12) indique que l'élément de soupape (6) s'est levé.

8. Système selon une quelconque des revendications 3 à 7, dans lequel une de l'au moins une valeur de pression de consigne est déterminée être la pression la plus élevée enregistrée durant l'essai.

9. Système selon une quelconque des revendications 3 à 8, dans lequel une de l'au moins une valeur de pression de consigne est déterminée être une pression de ré-étanchéisation ou une pression de réenclenchement, dans lequel l'ordinateur (16) est agencé pour déterminer la pression de ré-étanchéisation en tant que pression d'entrée lorsque le résultat provenant du capteur acoustique (13) est inférieur à un seuil acoustique prédéterminé et dans lequel l'ordinateur (16) est agencé pour déterminer une pression de réenclenchement en tant que pression d'entrée lorsque le déplacement mesuré par le capteur de déplacement (12) est inférieur à un seuil prédéterminé.

10. Système selon une quelconque revendication précédente, dans lequel le taux prédéterminé est dans la plage de 2 % à 4 % de la pression de consigne prévue par seconde.

11. Système selon une quelconque revendication précédente, dans lequel l'ordinateur (16) est agencé pour sélectionner différents algorithmes pour générer le résultat indicatif de la condition de la soupape de sûreté sur la base du type de soupape sur lequel des essais sont réalisés ; et/ou dans lequel le système affiche une pluralité de mesures numériques de paramètres calculés qui sont indicatifs de la condition d'une soupape de sûreté.

12. Système selon une quelconque revendication précédente, dans lequel l'unité d'affichage (17) est agencée pour afficher le résultat provenant de l'ordinateur (16).

13. Système selon la revendication 12, dans lequel le résultat provenant de l'ordinateur (16) est agencé pour indiquer la catégorie, d'une pluralité de catégories, dans laquelle la condition de la soupape se trouve, dans lequel chacune des catégories a une couleur associée à celle-ci pour que la couleur soit sélectionnée pour indiquer la condition de la soupape de sûreté, et dans lequel l'unité d'affichage (17) affiche la couleur pour un opérateur de système.

14. Système selon une quelconque revendication précédente, dans lequel le système est agencé pour produire un certificat d'essai en papier suivant la réalisation d'essais ; et/ou dans lequel le système est agencé pour stocker des données d'étalonnage et de plage, par rapport à chacun des capteurs, dans une mémoire, et accéder à l'étalonnage, et le comparer à un ensemble de données d'étalonnage nécessaire pour ainsi déterminer si les conditions d'étalonnage et de précision sont respectées.

15. Système selon une quelconque revendication précédente, dans lequel l'affichage (17) est agencé pour présenter une pluralité de relevés graphiques des données de soupape, optionnellement dans lequel l'ordinateur (16) applique un algorithme pour lisser les relevés.
